# EUROPEAN PATENT APPLICATION

(11) **EP 4 606 695 A1**
(43) Date of publication of application: **27.08.2025**
(21) Application number: 24159055.3
(22) Date of filing: 22.02.2024
(51) Int. Cl.: B64C 1/06, B64D 27/30, B64D 37/02, B64D 37/32

(54) **AIRCRAFT AND FUSELAGE WITH ENERGY ABSORBING STRUCTURE**

(71) Applicant: Airbus Operations GmbH, 21129 Hamburg (DE)
(72) Inventor: Siemann, Martin, 21129 Hamburg (DE)

(57) **Abstract**

Disclosed is a fuselage 100, 100', 100" of or for an aircraft. The fuselage comprises a shell 10, at least one hydrogen tank 20, an energy absorbing structure 30 arranged between the shell 10 and the at least one hydrogen tank 20, and a support structure 40, 40' supporting at least a portion of the at least one hydrogen tank 20 within the shell 10. The support structure 40, 40' comprises an interstitial section 52, 54ᵢ located between the at least one hydrogen tank 20 and the energy absorbing structure 30. Furthermore, the support structure 40, 40' comprises a strut system 60 supporting the at least said portion of the one hydrogen tank 20 against the interstitial section 52. The support structure 40' may further brace at least said portion or at least a further portion of the at least one hydrogen tank 20, 20b in a roof section 100_{R} of the fuselage, e.g. by means of one or various support elements 70'.

Further disclosed is an aircraft comprising such fuselage 100, 100', 100".

## Description

The present invention concerns a fuselage with at least one hydrogen tank, and an aircraft comprising such fuselage.

The consideration of potential crash scenarios generally is an important field in vehicle construction. In particular, energy absorbing structures providing advantageous buffers are disclosed in the 1992 NASA Technical Paper "Relationship Between Mechanical-Property and Energy-Absorption Trends for Composite Tubes" of Gary L. Farley. Energy-absorbing structures for helicopters are described by Zhou HuaZhi and Wang ZhiJin in "Study and Optimization of Helicopter Subfloor Energy Absorption Structure with Foldcore Sandwich Structure" (IOP Conf. Series: Materials Science and Engineering 269 (2017)). In US 5,069,318 concerning aircraft and helicopter type structures made from composite materials, self-stabilized stepped crashworthy stiffeners are disclosed. From US 8,376,275 B2, an energy absorbing structure for aircraft is known, and WO 2009/003870 A2 discloses a structural component with rib and cross member element.

Aircraft typically comprise one or more fuel tank/s containing a fuel to be supplied to the aircraft's one or several propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been researched for. In this respect, hydrogen/electric aircraft engines, any propulsion engine, which includes piston engines, turbine engines of any architecture, and fuel cell powered electrical propulsion motors have emerged as a promising possibility, for instance. In particular, turbo fans and fuel cells/ electric engines respectively powered by hydrogen are being developed and improved as aircraft engines.

The hydrogen employed in such aircraft can be stored and transported in its liquid state in hydrogen tanks (being pressurised vessels configured to contain liquid hydrogen) carried by the respective aircraft.

It is an object of the present invention to provide a fuselage comprising at least one hydrogen tank and accomplishing an advantageous crashworthiness. It is a further object to provide an aircraft comprising such fuselage.

The object is achieved with a fuselage according to claim 1 and with an aircraft according to claim 11. Advantageous embodiments are disclosed in the dependent claims, the description, and the drawings.

A fuselage according to the present invention forms part of an aircraft or is devised to form part of an aircraft. It comprises a shell, one or several (i.e., at least one) hydrogen tank/s and an energy absorbing structure arranged between the shell and the energy absorbing structure, preferably at least partially in a bottom section of the fuselage. In particular, the energy absorbing structure may advantageously at least partially be arranged between a bottom of the shell and the at least hydrogen tank; the energy absorbing structure may thus be installed at least partially in a subtank zone, i.e., below the at least one hydrogen tank. Here and in the following, terms referring to a particular orientation (such as "below" in the just mentioned case, or "in front", "aft", "rear", "behind", or the like) relate to an orientation and/or flying direction the fuselage has (in particular) when it is horizontally flying in a designated manner. In order to improve readability and to provide for a concise wording, an explicit reference to said underlying orientation and/or direction of flight is in many cases omitted in this text.

The at least one hydrogen tank may be a discrete (pressure) vessel and thus non-integral, or it may be integral and thus at least partially delimited by components (such as a portion of the shell) having a further function in the fuselage.

Preferably, the at least one hydrogen tank is arranged in an aft portion of the fuselage.

The fuselage according to the present invention further comprises a support structure supporting at least a portion of the at least one hydrogen tank within the shell. Such portion may in particular comprise a component delimiting an interior space of the hydrogen tank within the shell. For instance (and in particular in case of an integrated hydrogen tank as mentioned above), such portion may comprise a tank wall, a floor component forming a ground of the hydrogen tank, and/or a pressure bulkhead forming a cap of the hydrogen tank.

The support structure comprises a section located between the at least one hydrogen tank and the energy absorbing structure. Due to said position, this section of the support structure is further referred to as "interstitial section". It in particular serves to support the energy absorbing structure in its intended position such as (preferably) in the subtank zone.

The support structure further comprises a strut system which supports at least said portion of the at least one hydrogen tank against the interstitial section. The strut system may in particular comprise one or several strut/s configured as compression absorbers and/or as tension absorbers.

The fuselage according to the present invention thus implements an advantageous crash concept according to which a majority of energy (preferably, 80% - 90% or even 80% - 100%) can be absorbed by the energy absorbing structure, and the eventually remaining energy is absorbed by the support structure and/or the surrounding airframe (comprising shell, frames, stringers, etc.). The majority of the crash energy thus is absorbed farther away from the hydrogen tank/s, whereby the crashworthiness of the fuselage is improved. In particular, the inventive concept enables a homogeneous crash energy absorption.

Preferably, one or several route system component/s are arranged in interspaces between the at least one hydrogen tank and the interstitial section of the support structure. Such embodiment thus implements the advantageous crash concept with a particular beneficial utilisation of the fuselage's volume.

The support structure of a fuselage according to the present invention may comprise one or several frame/s which each entirely or partially surround/s the at least one hydrogen tank. Said frame/s may extend in a region between the at least one hydrogen tank and the energy absorbing structure. More specifically, it/they may comprise a (preferably stiff) portion comprised by the interstitial section of the support structure; such frame portions, which may be integrated in the respective frame or assembled (e.g. as a detachable piece, in particular facilitating a tank access as mentioned below) with another portion of the respective frame, are further referred to herein as "interstitial frame portions". In particular, the strut system may support at least said portion of the at least one hydrogen tank against one or several of such interstitial frame portion/s.

According to advantageous embodiments, the fuselage comprises one or several (preferably stiff) cross beam/s which between the at least one hydrogen tank and the energy absorbing structure run/s in a direction orthogonal or inclined to the longitudinal sense of the fuselage. The strut system may then in particular support at least said portion of the at least one hydrogen tank against such cross beam/s comprised by the interstitial structure.

Additionally or alternatively, the fuselage may comprise one or several (preferably stiff) beam/s extending in the longitudinal sense of the fuselage/ shell, therefore further referred to as longitudinal beam/s. One or several of such longitudinal beam/s may at least partially run between the at least one hydrogen tank and the energy absorbing structure. Accordingly, at least one portion of such longitudinal beam/s may be comprised by the interstitial section; such portions are further referred to as "interstitial longitudinal beam portions". The strut system may then in particular support said portion of the at least one hydrogen tank against such interstitial longitudinal beam portion/s.

In particular, the interstitial section of the support structure may include an orthogrid and/or an angled grid respectively formed by one or several interstitial frame portion/s, one or several cross beam/s, and/or one or several longitudinal beam portion/s as mentioned above.

At least a portion of the support structure comprised by the fuselage according to the present invention may form part of a fuselage reinforcement structure which may in particular be configured to reinforce the shell.

Such fuselage reinforcement structure may comprise one or several of said frame/s and/or longitudinal beam/s at least partially comprised by the interstitial section as detailed above. It may also comprise one or several further frame/s at least partially surrounding a longitudinal axis of the fuselage, and/or one or several further beam/s running in a longitudinal direction of the fuselage. In particular, the fuselage reinforcement structure may include an orthogrid formed by its frames and longitudinal beam/s. As a further (alternative or additional) possibility, in particular in a region forward and/or aft the tank and/or at a roof of the fuselage, the fuselage reinforcement structure may include one or several brace/s arranged inclined to parallel longitudinal beam/s of the fuselage reinforcement structure, which thus may have an angled (oblique) grid structure.

Such inclined braces may serve as tank attachments for loads acting in the designated direction of flight. They can advantageously be placed around a circumference of the fuselage, in particular at the sides and/or at an upper portion of the fuselage (with respect to an orientation designated for horizontal flight). Advantageously, one or more of such inclined brace/s may be configured as a tensile absorber stabilising the hydrogen tank when this moves forward relative to the surrounding fuselage in a potential crash scenario. For instance, following a direction opposite to the designated direction of flight, at least one of the inclined brace/s may run outwards (i.e., away from the hydrogen tank).

According to further advantageous embodiments, the fuselage reinforcement structure may comprise one or several crossbrace/s which (with regard to the designated direction of flight of the fuselage) in particular may be arranged forward and/or aft the at least one hydrogen tank. Such crossbrace/s, which preferably run/s orthogonally to the designated direction of flight of the fuselage, may serve to reduce ovalisation of the fuselage in a crash case.

Further to supporting at least a portion of at least one hydrogen tank against its interstitial section, the support structure may brace at least said portion and/or a further portion of the at least one hydrogen tank against a roof section of the fuselage (in particular, of its fuselage reinforcement structure), e.g. with one or various support elements the support structure may comprise. For example, such support element/s may be configured as beams and/or it/they may comprise a flat structure with stiffeners such as ribs. Such embodiment ensures a particularly stable support of the hydrogen tank and thus a particularly good absorption of crash energy.

According to advantageous embodiments, the shell and/or (eventually) the fuselage reinforcement structure is/are at least partially metallic, made of a composite, or made of a combination of thereof. The metal (if included) may in particular comprise aluminium and/or at least one aluminium alloy.

The at least one hydrogen tank may preferably be formed by a tubelike tank wall whose opposite open ends are closed by respective caps; such caps may respectively be shaped as a spherical dome, or have an ellipsoidal or a torispherical shape. Advantageously, the hydrogen tank is arranged with its longitudinal axis running in a longitudinal direction of the fuselage/ shell. In such case, (and with respect to the designated direction of flight), said caps may thus form a front and a rear of the hydrogen tank. The tubelike tank wall may have a (straight or bulged) cylindrical shape or a (straight or bulged) conical shape, or it may comprise at least a portion having a (straight or bulged) cylindrical shape and/or at least a portion having a (straight or bulged) conical shape. In particular in case of an integral tank as mentioned above, at least a portion of the tubelike tank wall may be formed by a section of the shell and a floor component forming a ground of the hydrogen tank, for example.

In such embodiments, the strut system comprised by the support structure may retain the at least one hydrogen tank at the tubelike tank wall thereof.

For instance, the strut system may comprise a plurality of (preferably straight) struts which are fixed (e.g., by respective mount elements) to the tubelike tank wall of the at least one hydrogen tank and to the interstitial section. Therein, the struts may be arranged parallel to each other and offset along a longitudinal sense of the fuselage.

In particular, in embodiments where the interstitial section comprises respective portions of several frames surrounding the tank, a respective one of said parallel struts may support the tank against a respective one of the several frames (portions). That is, different frames may hold different struts. Additionally or alternatively, if the interstitial section comprises several crossbeams, a respective one of said parallel struts may support the tank against a respective one of the several crossbeams. That is, different crossbeams may hold different struts.

Such tank support at several points and on several frames and/or crossbeams along a length of the tank (measured in longitudinal sense of the fuselage) is further referred to as "continuous support". It in particular promotes a homogeneous crash energy absorption.

Additionally or alternatively, the strut system comprised by the support structure may retain the at least one hydrogen tank at its front (in particular, at a front cap) facing in the designated direction of flight. Analogously, the strut system comprised by the support structure may (additionally or alternatively) retain the at least one hydrogen tank at its rear (preferably at a centre portion of said rear) facing in a direction opposite to the designated direction of flight; said rear may in particular comprise a rear cap of the hydrogen tank.

In particular, in these cases, the support structure may preferably be attached to a centre region of a tank's dome (respectively being said front or rear of the tank), thereby providing a tank support further referred to as "polar support". In such embodiments, the centre region (around a centre point) may have a radius of at most a third or at most a quarter of the dome's radius. More specifically, the support structure may even be attached to a (respective) pole of the dome mounted at a centre point thereof.

Additionally or alternatively, the support structure may be attached to one or both tank's dome/s (front and/or rear) at a distance of at least a third or at least a half of a dome's radius from a centre of the respective dome, thereby providing a support further referred to as "dome support". Accordingly, in such embodiments, a pole of the respective dome preferably is not connected to the support structure.

In particular, the support structure may include at least one mount element connecting one or various struts and/or support elements to the tank's dome. The at least one mount element may be shaped as a disk or ring whose centre preferably coincides with a centre of the respective dome. The radius of the at least one mount element may preferably be in the range mentioned above for polar support and for dome support, respectively.

The energy absorbing structure of the fuselage according to the present invention preferably implements compression as energy absorption mechanism. With regard to a coordinate system whose x-axis runs in a longitudinal direction of the fuselage, whose y-axis runs in a lateral direction of the fuselage, and whose z-axis runs orthogonally to x- and y-axes (and thus vertically when the fuselage is oriented as designated for normal horizontal flight), the energy absorbing structure may comprise a plurality of energy absorbing elements running in z-direction (further referred to as vertical energy absorbing elements).

Additionally or alternatively, the energy absorbing structure may preferably comprise one or various web/s (thus, strip-shaped wall elements). For example, with regard to the above-mentioned coordinate system, such web may extend in x- and in z-direction (and thus in particular run longitudinally to the fuselage), or in y- and z-direction (thus running laterally to the fuselage). In particular, the energy absorbing structure preferably comprises a lattice formed of both longitudinal and lateral webs. Thereby, a particularly stable energy absorbing structure can be achieved.

Particularly advantageous are embodiments with an energy absorbing structure comprising both one or various of said web/s and a plurality of vertical energy absorbing elements as mentioned above. Therein, two or more of these vertical energy absorbing elements may preferably be connected to each other by the web/s. In these embodiments, the web/s may serve to stabilise the energy absorbing elements, thereby avoiding or at least reducing bending failure thereof. In particular, the energy absorbing structure may comprise a lattice of both longitudinal and lateral webs, and a plurality of said vertical energy absorbing elements positioned at intersections of the longitudinal and lateral webs.

In the embodiments mentioned above, the web or - if various are comprised - at least one of the webs may be vertically corrugated. That is, following its extension in the longitudinal and/or lateral direction to the fuselage, respectively, the web may run along a sinusoidal, trapezoidal and/or in a zig-zagged (thus, folded) course. Such corrugation improves the stability and energy absorbing functionality of the web/s.

Additionally or alternatively, the energy absorbing structure may comprise at least one tube-type absorber, at least one shear wall extending in a plane orthogonal to a longitudinal axis of the fuselage, at least one framework (in particular, one or several stanchion/s), a foam, and/or a lattice structure.

For example, the energy absorbing structure may include one or several of said web/s which are combined with one or several tube-type absorber/s, wherein the tube-type absorbers may possibly be reinforced by at least one shear wall extending in a plane orthogonal to a longitudinal axis of the fuselage.

Preferably, at least a portion of the energy absorbing structure has an auxetic behaviour. When compressed, such portion thus contracts perpendicularly to a compressing force's direction.

Following a longitudinal direction of the fuselage, the energy absorbing structure may exhibit different energy absorption characteristics (i.e., force-displacement curves) at different positions. Thereby, the energy absorbing structure may be adapted in particular to respective mass distributions arising in the longitudinal direction, such as along the one or several hydrogen tank/s, respective capsule/s including one or more component/s serving for operating the tank/s, and/or interspaces.

Additionally or alternatively, the energy absorbing structure may exhibit different energy absorption characteristics (i.e., force-displacement curves) at different positions following a lateral direction of the fuselage.

According to advantageous embodiments, the fuselage of the present invention comprises at least one access panel configured to selectively close or release an opening in the shell, thereby facilitating access to the at least one hydrogen tank, such as for installation, maintenance and/or removal thereof.

Such access panel may be arranged in a roof section and/or in a lateral section of the shell. Additionally or alternatively, the fuselage may comprise such access panel in a bottom section of the shell. More specifically, the shell may include an access panel selectively closing or releasing an opening for extraction of the hydrogen tank, wherein at least a portion of the energy absorbing structure and/or at least a portion of the support structure are at least partially removable, through the opening, from an interior space of the fuselage. In particular, said portion of the support structure (which may comprise at least a portion of the interstitial section) may advantageously be temporarily detachable from the hydrogen tank and/or temporarily detachable from another portion of the support structure, such as a remaining fuselage reinforcement structure and/or at least a portion of the strut system.

The shell of a fuselage according to the present invention may preferably have a circular cross section in at least a portion encasing a passenger compartment of the fuselage. By contrast, in an aft portion preferably containing the at least one hydrogen tank, the shell may advantageously have a stretched cross section at least where running around the at least one hydrogen tank, the energy absorbing structure, and the support structure. Such shape may provide for a particularly beneficial adaptation of the shell's shape to the above-mentioned components facilitating the crash absorption in consideration of a stroke required to yield acceptable acceleration limits. In particular, as compared to the shell shape about said portion of the passenger compartment, in the aft portion, the shell may comprise a raised roof section, and/or it may taper below the at least one hydrogen tank.

According to advantageous embodiments, the fuselage may comprise a pipe and supply system configured to supply hydrogen contained in the at least one hydrogen to one or more propulsion engines of the aircraft and/or to an auxiliary power unit eventually further comprised by the aircraft or even the fuselage.

An aircraft according to the present invention comprises a fuselage according to an embodiment of the present invention. In addition, the aircraft preferably comprises in particular at least two wings extending from the fuselage, an empennage, and/or an undercarriage.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure, and the same holds for evident analogies between the figures.

Shown are schematically in
- Fig. 1a:: a fuselage according to a first exemplary embodiment of the present invention in a cross section;
- Fig. 1b:: a portion of the fuselage of Figure 1a in a longitudinal section;
- Fig. 2a:: a fuselage according to a second exemplary embodiment of the present invention in a cross section;
- Fig. 2b:: a portion of the fuselage of Figure 2a in a longitudinal section;
- Fig. 3a:: a fuselage according to a third exemplary embodiment of the present invention in a cross section;
- Fig. 3b:: a portion of the fuselage of Figure 3a in a longitudinal section;
- Fig. 4a:: a shape of a portion of a fuselage according to an exemplary embodiment of the present invention; and
- Fig. 4b:: construction details of the portion of Figure 4a.

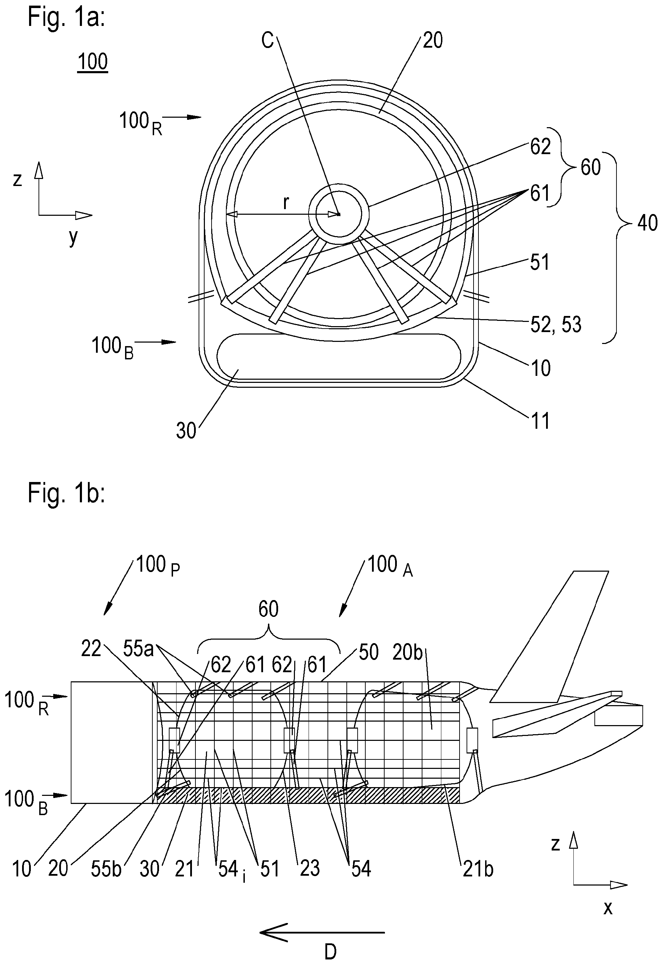

Figures 1a, 1b illustrate an aircraft`s fuselage 100 according to an exemplary embodiment of the present invention in an orientation designated for normal horizontal flight of the aircraft.

Accordingly, a bottom section 100_{B} of the fuselage 100 is shown in a lower part of the figures, and a roof section 100_{R} of the fuselage is depicted in an upper part of the figures.

Figure 1a illustrates the fuselage 100 in a schematical cross section taken orthogonally to a longitudinal direction of the fuselage, and Figure 1b represents an aft portion of the fuselage in a schematical longitudinal section. As indicated by respective coordinate systems, the cross section of Figure 1a is considered as extending in an y-z- plane, and the longitudinal section of Figure 1b is considered as extending in an x-z- plane.

The fuselage 100 comprises a shell 10 defining an interior space of the fuselage, and a hydrogen tank 20 (which in this case is non-integral) arranged within the interior space. As indicated in Figure 1b, the hydrogen tank 20 has a tube-like (in this case cylindrical) tank wall 21, a front 22 facing in a designated direction D of the aircraft, and a rear 23 facing in the opposite direction. The front 22 and the rear 23 serve as caps closing the opposite openings of the tube-like tank wall 21.

As further apparent from Figure 1b, a further tank 20b is installed, in the interior space, behind the hydrogen tank 20. The further tank 20b has a tube-like tank wall 21b which in this case has a conical shape.

Both hydrogen tanks 20, 20b are arranged in an unpressurised aft portion 100_{A} of the fuselage 100 which with regard to a designated direction D of flight of the aircraft is positioned behind a fuselage portion 100_{P} comprising a passenger compartment. In particular, the fuselage 100 thus implements a caudal tandem configuration.

The fuselage 100 further comprises an energy absorbing structure 30 which is arranged in the bottom section 100_{B} of the fuselage 100. The energy absorbing structure 30 may comprise one or several web/s (not shown) which may extend in the y- and z- directions indicated in Figure 1a. As a particular example, such web/s may be combined with one or several tube-type absorber/s which may possibly be reinforced by at least one shear wall extending in a plane orthogonal to a longitudinal axis of the fuselage. Additionally or alternatively, the energy absorbing structure may comprise a foam and/or a lattice structure (not shown).

Furthermore, the fuselage 100 shown in Figures 1a, 1b comprises a support structure 40 supporting the hydrogen tank 20 within the shell 10.

As apparent from Figure 1b, the hydrogen tank 20b is analogously supported by the support structure 40, which is not further detailed herein for conciseness purposes and due to the evident correspondences.

An interstitial section 52 of the support structure 40 is located between the hydrogen tank 20 and the energy absorbing structure 30. In the embodiment shown, the interstitial section comprises several cross beams 53 respectively complementing a respective frame 51 partially surrounding the hydrogen tank 20 and likewise comprised by the support structure 40. The frames 51 with the cross beams 53 and a plurality of longitudinal beams 54 form an orthogrid comprised by a fuselage reinforcement structure 50.

The set of longitudinal beams 54 includes longitudinal beams 54ᵢ which respectively include a portion comprised by the interstitial section 52, as they partially run between the hydrogen tank 20 and the energy absorbing structure 30. In the roof section 100_{R} of the fuselage 100 and in front of the hydrogen tank 20 (with respect to the designated direction D of flight), the fuselage reinforcement structure 50 further comprises braces 55a, 55b arranged inclined to the longitudinal beams 54 of the fuselage reinforcement structure, thereby providing for an angled (oblique) grid structure of the fuselage reinforcement structure 50. The inclined braces 55a, 55b serve as tank attachments for loads acting in the designated direction D of flight. They can advantageously be placed around a circumference of the fuselage, in particular at the sides and/or at an upper portion of the fuselage in cross section. In the embodiment shown, following a direction opposite to the designated direction D of flight, the inclined braces 55a run outwards (away from the hydrogen tank), thereby serving as tensile absorbers when the hydrogen tank moves forward in a crash case.

The support structure 40 of the fuselage 100 further comprises a strut system 60 supporting the hydrogen tank 20 against the interstitial section 52 of the support structure 40. Therein, in the exemplary case depicted, and as apparent from Figure 1b, the strut system 60 retains the hydrogen tank 20 at respective centre portions of the hydrogen tank's front 22 and the hydrogen tank's rear 23, preferably in both cases in the same way. Accordingly, Figure 1a may show the front or the rear of the hydrogen tank 20. In particular, the embodiment depicted implements a polar support concept.

The strut system 60 comprises struts 61 serving as compression absorbers and rising from the interstitial section 52, in particular from cross beams 53, to respective mount elements 62 fixed to the hydrogen tank's domes, namely, its front 22 and its rear 23, respectively. In particular, in the exemplary embodiment shown in Figures 1a, 1b, the hydrogen tank 20 is supported only towards the bottom of the fuselage.

In Figure 1a, 1b, the mount elements 62 are shown as rings fixed to a respective centre region of the domes (which centre region may have a radius of at most a third or at most a quarter of the dome's radius r).

Alternatively, respective struts (which are shorter than those shown in Figures 1a, 1b) may be connected to the tank's front and/or rear by respective mount elements arranged at a larger distance to a centre C of the tank's domes (front 22 and/or rear 23), such as at a distance of at least a third or at least a half of a dome's radius r. In such embodiments realising a dome support concept as mentioned above, the strut system thus connects the interstitial section 52 with the respective dome further away from its pole (not shown).

As indicated in Figure 1a, the shell 10 of the fuselage 100 includes a detachable access panel 11 releasing, in a detached state, an opening and thereby providing access to the hydrogen tank 20. At least a portion of the energy absorbing structure 30 and/or at least a portion of the support structure 40 (such as at least a portion of its interstitial section 52) may preferably be temporarily removable through the opening (not shown), thereby improving the access to the hydrogen tank 20, in particular allowing an extraction of the hydrogen tank 20 from the interior of the shell (when required).

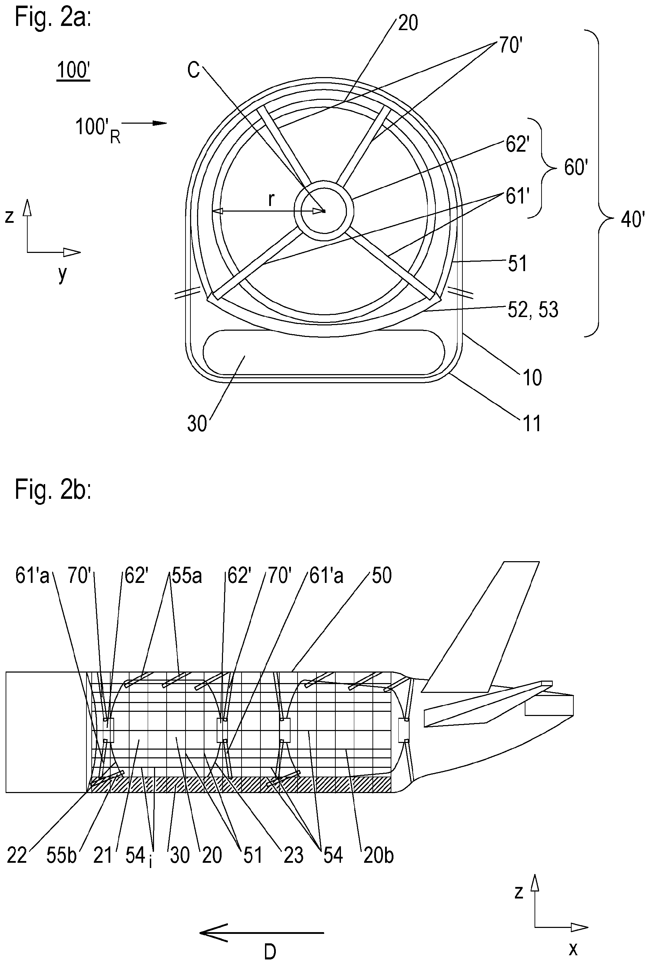

Figures 2a, 2b illustrate, by respective sections analogous to Figures 1a, 1b, an alternative fuselage 100' according to an exemplary embodiment of the present invention, which differs from the fuselage 100 of Figures 1a, 1b in the support structure 40'. In particular, while shell 10 (with the access panel 11), the hydrogen tanks 20, 20b, the energy absorbing structure 30 and the fuselage reinforcement structure with the frames 51, cross beams 53, longitudinal beams 54, and braces 55a, 55b are constructed and arranged as described above with respect to Figures 1a, 1b, the support structure 40' of the embodiment shown in Figures 2a, 2b includes, further to the interstitial section 52, a strut system 60' and support elements 70'.

Therein, the strut system 60' comprises struts 61' serving as compression absorbers and rising from respective interstitial sections 52, in particular from the cross beams 53, to respective mount elements 62' fixed to the hydrogen tank's front 22 and the hydrogen tank's rear 23, respectively (see Fig. 2b).

The support elements 70' are fixed to the respective mount elements 62' in a centre region of the front 22 and the rear 23, respectively, of the hydrogen tank 20, and to a portion of the fuselage reinforcement structure 50 which is located in a roof section 100'_{R} of the fuselage 100'. By means of the support elements 70', the support structure 40' thus braces the hydrogen tank 20 also in said roof section 100'_{R}. Accordingly, the strut system 60' and the braces 70' together serve to support the front 22 and the rear 23 of the hydrogen tank 20 around a circumference thereof. In particular, the embodiment depicted in Figure 2a, 2b implements a polar support concept.

Alternatively, and analogous to the case described above with respect to Figures 1a, 1b, respective struts and support elements (being shorter than those shown in Figures 2a, 2b) may be connected to the tank's front and/or rear by respective mount elements arranged at a larger distance to a centre C of the tank's domes (front 22 and/or rear 23), such as at a distance of at least a third or at least a half of a dome's radius r. In such embodiments (not shown) realising a dome support concept as mentioned above, the support structure thus connects the respective dome further away from its pole with the interstitial section and with a portion of the fuselage reinforcement structure in a roof section 100'_{R}.

In the embodiment shown in Figures 2a, 2b, the front 22 and the rear 23 are supported in the same manner against the interstitial section.

By contrast, the domes (the front and the rear) of the hydrogen tank 20 might alternatively be supported differently to each other against the interstitial section (not shown). For instance, one of said domes might be supported as shown in Figure 2a, whereas the respective other dome may be supported, only towards the bottom of the fuselage (e.g., such as shown in Figure 1a).

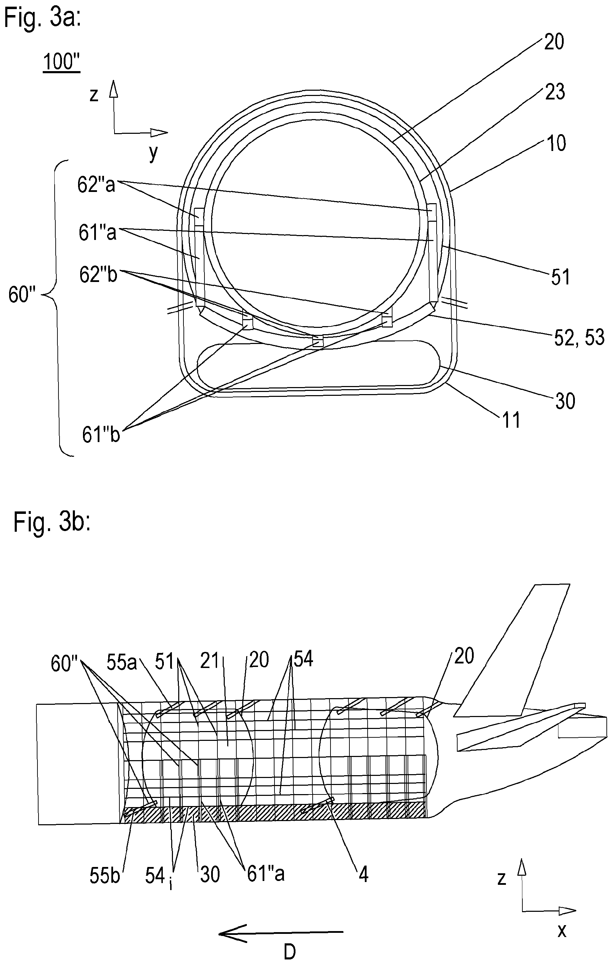

Figures 3a, 3b illustrate, by respective sections analogous to Figures 1a, 1b, 2a, 2b, a further alternative fuselage 100'' according to an exemplary embodiment of the present invention. Again the shell 10 (with the access panel 11), the hydrogen tanks 20, 20b, the energy absorbing structure 30 and the fuselage reinforcement structure with the frames 51, cross beams 53, longitudinal beams 54, and braces 55a, 55b are constructed and arranged as described above with respect to Figures 1a, 1b.

However, in case of the fuselage 100'' shown in Figures 3a, 3b, the hydrogen tank 20 (and analogously, the hydrogen tank 20b) is retained, by a strut system 60'' (comprised by a support structure of the fuselage 100") at its tube-like tank wall 21.

The strut system 60` includes a plurality of (pairwise) parallel struts 61"a, 61''b serving as compression absorbers and rising from the interstitial section 52, in particular from cross beams 53, to respective ones of a plurality of mount elements 62''a, 62''b fixed to the hydrogen tank's tubelike tank wall 21. Therein, some struts 62''b are arranged below the hydrogen tank 20, and other struts 61"a run tangentially to the tank wall 23 and respectively are at least partially located between one of the frames 51 and the hydrogen tank 20.

As apparent from Figures 3a, 3b in combination, different cross beams 53 hold different struts 61"a, 61''b. In particular, several struts 62''a, 62''b are offset in x-direction, i.e., in a longitudinal sense of the fuselage 100". The support structure of the fuselage 100'' shown in Figures 3a, 3b thus embodies a continuous support concept as defined above.

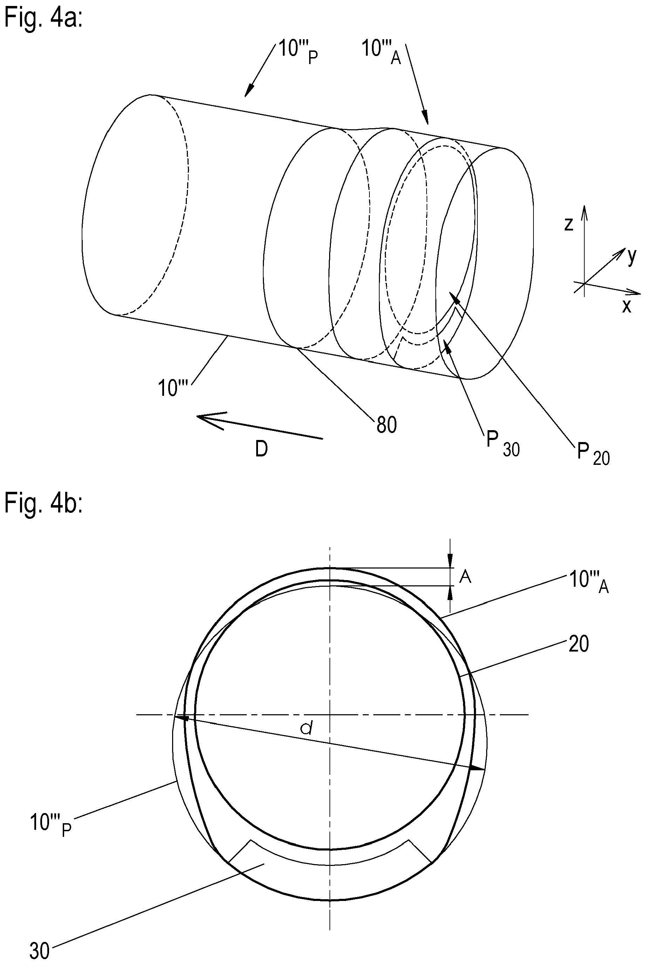

Figures 4a, 4b illustrate a shape of a fuselage's shell 10‴ according to an exemplary embodiment of the present invention. Therein, a section of the shell 10‴ includes a part 10‴_{P} encasing (in particular) a passenger compartment (not shown), and a part 10‴_{A} relating to an aft portion of the fuselage and encasing (in particular) a hydrogen tank 20 at a position P₂₀, an energy absorbing structure 30 at a position P₃₀, and a support structure (not shown).

As apparent from Figures 4a, 4b, the shell 10‴ has a circular cross section in said part 10‴_{P} encasing (in particular) the passenger compartment, and a stretched cross section in said part 10‴_{A} relating to the aft portion of the fuselage, which are separated from each other by a rear pressure bulkhead 80. In particular, as compared to the shell shape in said part 10‴_{P} encasing (in particular) a passenger compartment, the shell comprises a raised roof in the part 10‴_{A} relating to the aft portion.

For example, the roof may raise, from a circular cross section of part 10‴_{P} to a non-circular cross section of part 10‴_{A}, by an amount A being in the range from 2% to 8% or even from 4% to 6% of the diameter d of said part 10‴_{P} encasing the passenger compartment.

Disclosed is a fuselage 100, 100', 100'' of or for an aircraft. The fuselage comprises a shell 10, at least one hydrogen tank 20, an energy absorbing structure 30 arranged between the shell 10 and the at least one hydrogen tank 20, and a support structure 40, 40' supporting at least a portion of the at least one hydrogen tank 20 within the shell 10. The support structure 40, 40' comprises an interstitial section 52, 54ᵢ located between the at least one hydrogen tank 20 and the energy absorbing structure 30. Furthermore, the support structure 40, 40' comprises a strut system 60 supporting the at least said portion of the one hydrogen tank 20 against the interstitial section 52. The support structure 40' may further brace at least said portion or at least a further portion of the at least one hydrogen tank 20, 20b in a roof section 100_{R} of the fuselage, e.g. by means of one or various support elements 70'.

Further disclosed is an aircraft comprising such fuselage 100, 100', 100'' .

### Reference signs

- 10, 10‴: shell
- 10‴_{A}: shell part relating to an aft portion
- 10‴_{P}: shell part encasing a passenger section
- 11: access panel
- 20, 20b: hydrogen tank
- 21, 21b: tubelike tank wall
- 22: front of hydrogen tank
- 23: rear of hydrogen tank
- 30: energy absorbing structure
- 40, 40': support structure
- 50: fuselage reinforcement structure
- 51: frame
- 52: interstitial section
- 53: cross beam comprised by interstitial section
- 54: longitudinal beam
- 54ᵢ: interstitial longitudinal beam portion
- 55a, 55b: brace
- 60, 60', 60'': strut system
- 61, 61'a, 61'b, 61''a, 61''b: strut
- 62, 62', 62''a, 62'': bmount element
- 70': support element
- 80: rear pressure bulkhead
- 100, 100', 100'': fuselage
- 100_{A}: aft portion of fuselage
- 100_{B}: bottom section of fuselage
- 100_{P}: fuselage portion comprising a passenger compartment
- 100_{R}: roof section of fuselage
- A: amount of roof raise
- C: centre of dome
- d: diameter of shell part 10‴_{P}
- D: designated direction of flight
- P₂₀: position of hydrogen tank
- P₃₀: position of energy absorbing structure
- r: tank dome's radius

## Claims

1. Fuselage (100, 100', 100") of or for an aircraft, the fuselage comprising
- a shell (10),
- at least one hydrogen tank (20),
- an energy absorbing structure (30) arranged between the shell and the at least one hydrogen tank,
- a support structure (40, 40`) supporting at least a portion of the at least one hydrogen tank (20) within the shell (10), the support structure comprising
• an interstitial section (52, 54ᵢ) located between the at least one hydrogen tank (20) and the energy absorbing structure (30) and
• a strut system (60, 60', 60") supporting at least said portion of the at least one hydrogen tank (20) against the interstitial section (52).

2. Fuselage according to claim 1, wherein the support structure comprises one or several frame/s (51) at least partially surrounding the at least one hydrogen tank (20).

3. Fuselage according to one of claim 1 or 2, wherein the strut system (60, 60', 60") supports at least said portion of the at least one hydrogen tank against one or several cross beam/s (53) comprised by the interstitial section (52).

4. Fuselage according to one of the preceding claims, wherein the strut system supports at least said portion of the at least one hydrogen tank against at least one interstitial longitudinal beam portion (54ᵢ).

5. Fuselage according to one of the preceding claims, wherein the support structure (40') further comprises one or several brace/s (55a, 55b) which are arranged inclined to parallel longitudinal beam/s (54) of a fuselage reinforcement structure and configured to carry loads in a designated direction (D) of flight.

6. Fuselage according to one of the preceding claims, wherein the strut system retains the hydrogen tank
- at a tubelike tank wall (21, 21b) of the at least one hydrogen tank (20); and/or
- at the hydrogen tank's front (22) facing in a designated direction (D) of flight of the fuselage, and/or
- at the hydrogen tank's rear (23) facing in a direction opposite to the designated direction (D) of flight of the fuselage.

7. Fuselage according to one of the preceding claims, wherein the support structure is attached
- to one or both tank's dome/s in a centre region of the respective dome/s; and/or
- to one or both tank's dome/s at a distance of at least a third or at least a half of a dome's radius (r).

8. Fuselage according to one of the preceding claims, wherein the energy absorbing structure (30) comprises
- at least one web with at least a corrugated and/or a straight web section;
- at least one tube-type absorber;
- at least one shear wall extending in a plane orthogonal to a longitudinal axis of the fuselage;
- at least one framework;
- a foam; and/or
- a lattice structure.

9. Fuselage according to one of the preceding claims, wherein the shell (10) includes an access panel (11) selectively closing or releasing an opening for extraction of the hydrogen tank (20), wherein at least a portion of the energy absorbing structure (30) and/or at least a portion of the support structure (40) are removable, through the opening, from an interior space of the fuselage.

10. Fuselage according to one of the preceding claims, wherein the hydrogen tank (20), the energy absorbing structure (30) and the support structure (40) are positioned in an aft portion (100_{A}) of the fuselage located aft a passenger compartment (100_{P}) further comprised by the fuselage,
wherein the shell (10‴) has a circular cross section in at least a portion (10‴_{P}) encasing a passenger compartment and a stretched cross section around the hydrogen tank (20), the energy absorbing structure (30), and the support structure (40) .

11. Aircraft comprising a fuselage (100) according to one of the preceding claims.
